# EUROPÄISCHE PATENTSCHRIFT

(11) **EP 3 121 294 B1**
(45) Veröffentlichungstag und Bekanntmachung des Hinweises auf die Patenterteilung: **01.01.2020**
(21) Anmeldenummer: 16178842.7
(22) Anmeldetag: 11.07.2016
(51) Int. Cl.: C21D 9/63, C22F 1/04, F27B 9/24, F27B 9/30, F27B 9/28, F27B 9/40, F27D 11/06, F27D 19/00

(54) **BERÜHRUNGSLOSE BANDFÜHRUNG**
CONTACTLESS TAPE GUIDE
GUIDAGE DE BANDE SANS CONTACT

(30) Priorität: 21.07.2015 AT 506382015
(43) Veröffentlichungstag der Anmeldung: 25.01.2017
(73) Patentinhaber: ANDRITZ Sundwig GmbH, 58675 Hemer (DE)
(72) Erfinder: BOGUSLAWSKY, Klaus, 58675 Hemer (DE); ALBRECHT, Jürgen, 58239 Schwerle (DE)
(74) Vertreter: Tschinder, Thomas

(56) Entgegenhaltungen:
- EP-A1- 0 068 272
- EP-A1- 0 721 993
- WO-A1-2016/096173
- DE-A1-102006 054 385
- US-A- 3 272 956
- Carl Kramer: "Continuous heat treatment of floatingly guided copper alloy strips" In: "HEAT Processing", 1. Januar 2003 (2003-01-01), Essen Germany, XP055276421, * das ganze Dokument *

## Beschreibung

Den Gegenstand dieser Erfindung bildet ein Verfahren zur Regelung des Bandlaufes eines Metallbandes durch eine Behandlungsvorrichtung. Die Behandlungsvorrichtung ist ein Schwebeofen, in dem das Metallband horizontal auf Luftkissen schwebend hindurchgeführt wird, wobei die Regelung des Bandlaufes innerhalb des Schwebeofens erfolgt.

In herkömmlichen Anlagen erfolgt die Bandregelung meist über bewegliche Steuerrollen, durch die der Bandlauf korrigiert werden kann.
Eine derartige Bandregelung ist aber in Glühöfen problematisch, da die Steuerrollen das weichgeglühte Metallband beschädigen können.
Daher erfolgt derzeit die Bandregelung mit Steuerrollen, die vor und nach dem Ofen angeordnet sind. Das Metallband wird auf Luftkissen schwebend durch den Ofen und die nachfolgende Kühlstrecke transportiert. Moderne horizontale Schwebeöfen inklusive Kühlstrecke können durchaus Längen von mehr als 130 m erreichen. Selbst wenn das Metallband mittig in den Schwebeofen geleitet wird, kommt es im Ofeninneren zu seitlichen Auslenkbewegungen. Wenn das weiche Band die Ofenwand berührt, kommt es zu Beschädigungen. Eine Lösungsmöglichkeit wäre, den Ofen erheblich breiter als das Metallband zu bauen, damit seitliche Auslenkbewegungen ohne Wandberührung in gewissem Umfang ermöglicht werden. Jedoch wird dann die Leistungsfähigkeit des Ofens nicht gut ausgenutzt. Eine weitere Möglichkeit wäre es, an der Ofenwand mechanische Begrenzungen anzuordnen, doch durch diese Begrenzungen können die Seitenränder des Metallbandes hochgebogen werden.

Die DE 1205291 beschreibt eine Vorrichtung zur Vermeidung von Wandberührungen durch ein speziell ausgestaltetes Luftkissen unterhalb des Bandes, durch das das Metallband selbständig zentriert wird. Aktiv kann der Bandlauf jedoch nicht beeinflusst werden.

Die DE 10 2006 054 385 A1 beschreibt eine Vorrichtung zum Ziehen oder Bremsen eines Metallbandes mit Hilfe von elektromagnetischen Induktoren, die oberhalb und unterhalb des Metallbandes angeordnet sind und ein elektromagnetisches Feld erzeugen.

Der Erfindung liegt daher die Aufgabe zugrunde, ein Verfahren zur Regelung des Bandlaufes bereitzustellen, bei dem es zu keiner Beschädigung des Metallbandes kommt. Gelöst wird diese Aufgabe durch die Merkmale des Patentanspruchs 1, nämlich durch ein Verfahren bei dem die seitliche Auslenkung durch einen Positionssensor ermittelt und entsprechend geregelt wird, wobei die Regelung des Bandlaufes berührungslos mit Hilfe einer ortsfesten elektromagnetischen Einrichtung erfolgt.
Die elektromagnetische Einrichtung erzeugt eine Lorentzkraft, welche auf das Metallband wirkt. Eine seitliche Auslenkung des Bandes wird durch den Positionssensor erfasst, welcher über eine Signalverarbeitungseinrichtung die elektromagnetische Einrichtung aktiviert. Die dadurch erzeugte Lorentzkraft schiebt das Band wieder in die korrekte Position.

Durch das berührungslos und damit verschleißarm arbeitende System kommt es zu keiner Bandbeschädigung mehr.

Die Erzeugung der Lorentzkraft zur Regelung des Bandlaufes erfolgt durch regelbare Elektromagnete.

Erfindungsgemäß handelt es sich bei dem Metallband um ein Nichteisenmetallband (NE Bänder). In diesen Bändern werden durch die regelbaren Elektromagnete Wirbelströme erzeugt, die ihrerseits ein Magnetfeld erzeugen, welches mit dem Magnetfeld der Elektromagnete wechselwirkt und so eine Kraftwirkung in der Bandebene in eine Richtung senkrecht zur Bandlaufrichtung erzeugt. Somit kann die seitliche Auslenkung beeinflusst werden.

Vorzugsweise weist die elektromagnetische Einrichtung Wicklungen auf, die als Hohlleiter ausgebildet sind, welche von einem Kühlmedium durchströmt werden.
So kann eine ausreichende Kühlung der elektromagnetischen Einrichtung innerhalb des Schwebeofens, der doch Temperaturen von 700°C erreicht, gewährleistet werden.

Beim Kühlmedium kann es sich um Wasser oder um ein biobasiertes dielektrisches Kühlmedium handeln. Die Verwendung von demineralisiertem Wasser ist vorteilhaft, da durch Verunreinigungen die Leitfähigkeit des Wassers stark zunimmt und dies zu Störungen im Betrieb führen kann.

Zum mechanischen und thermischen Schutz der Elektromagnete ist es günstig, wenn diese von einer Keramikabdeckung umgeben sind.

Es ist günstig, wenn das Metallband im Anschluss an den Schwebeofen auf einem Luftkissen schwebend durch eine Kühlstrecke, d.h. durch einen Kühlabschnitt, geführt wird, wobei die berührungslose Regelung des Bandlaufes mit Hilfe einer weiteren ortsfesten elektromagnetischen Einrichtung auch innerhalb dieser Kühlstrecke erfolgt. Idealerweise sind der Schwebeofen und der Kühlabschnitt direkt miteinander verbunden.

Die Erfindung betrifft auch eine Vorrichtung gemäß Anspruch 4 zur Regelung des Bandlaufes eines Metallbandes, wobei die Position des

Metallbandes mit einem Positionssensor ermittelt wird. Über regelbare Elektromagnete, die oberhalb und/oder unterhalb des Metallbandes angeordnet sind, wird die seitliche Auslenkung des Metallbandes geregelt.
Somit wird eine automatische Bandführung ohne Beschädigung des Bandes ermöglicht.

Im Folgenden wird ein Ausführungsbeispiel der Erfindung anhand einer Zeichnung beschrieben.

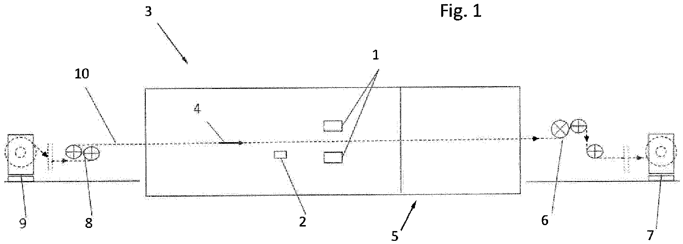

In Fig. 1 wird ein Metallband 10, im vorliegenden Fall ein Aluminiumband, von einer Abhaspel 9 abgewickelt. Die S-Rollen 8 führen das Aluminiumband 10 und halten den Bandzug aufrecht bevor es dem Schwebeofen 3 zugeführt wird. Im Schwebeofen 3 wird das Aluminiumband 10 mit Hilfe von Luftkissen, die durch oberhalb und unterhalb des Bandes angeordnete Düsenbalken erzeugt werden, berührungslos hindurchtransportiert und bei Temperaturen von über 500°C weichgeglüht.

Die seitliche Auslenkung des Aluminiumbandes 10 wird mit Hilfe des Positionssensors 2 ermittelt, natürlich können auch mehrere derartige Sensoren vorgesehen sein. Die elektromagnetische Einrichtung 1 wird hier durch Elektromagnete 1 gebildet, die sich oberhalb und unterhalb des Aluminiumbandes 10 befinden, dieses aber nicht berühren. Im Falle einer seitlichen Auslenkung, werden die Elektromagnete 1, aktiviert und so die seitliche Auslenkung senkrecht zum Bandlauf 4 korrigiert. Eine Regelung der Elektromagneten 1 kann beispielsweise mit Hilfe eines Potentiometers erfolgen, durch das die Richtung und die Amplitude der elektromagnetischen Kraft verändert wird.

Im Anschluss wird das Aluminiumband durch eine Kühlstrecke 5 schwebend hindurchgeführt. Die für die Bandlaufregelung notwendigen Elektromagnete 1 können auch in der Kühlstrecke 5 oder im Übergangsbereich vom Glühofen 3 zur Kühlstrecke 5 angeordnet sein.
Das abgekühlte und somit weniger empfindliche Aluminiumband 10 wird nachfolgend über eine Steuerrolle 6 geführt und einer Aufhaspel 7 zugeführt.

Die in der Zeichnung dargestellte Ausführungsform stellt lediglich eine bevorzugte Ausführung der Erfindung dar. Die Erfindung umfasst auch andere Ausführungsformen, bei denen eine schonende Bandlaufregelung erforderlich ist.

## Patentansprüche

1. Verfahren zur Regelung des Bandlaufes (4) eines Metallbandes (10) durch eine Behandlungsvorrichtung (3), wobei die Behandlungsvorrichtung ein Schwebeofen (3) ist, in dem das Metallband (10) horizontal auf Luftkissen schwebend hindurchgeführt wird und wobei die Regelung des Bandlaufes (4) innerhalb des Schwebeofens (3) erfolgt, **dadurch gekennzeichnet, dass** eine seitliche Auslenkung des Metallbandes durch einen Positionssensor (2) ermittelt und entsprechend geregelt wird, wobei die Regelung des Bandlaufes (4) berührungslos mit Hilfe ortsfester regelbare Elektromagnete (1) erfolgt und wobei es sich bei dem Metallband (10) um ein Nichteisenmetallband handelt, in dem durch die regelbaren Elektromagnete (1) Wirbelströme erzeugt werden, die ihrerseits ein Magnetfeld erzeugen, welches mit dem Magnetfeld der Elektromagnete (1) wechselwirkt und so eine Lorentzkraft in der Bandebene in eine Richtung senkrecht zur Bandlaufrichtung (4) erzeugt, wodurch die seitliche Auslenkung des Metallbandes (10) korrigiert wird.

2. Verfahren nach Anspruch 1, **dadurch gekennzeichnet, dass** die regelbaren Elektromagnete (1) Wicklungen aufweisen, die als Hohlleiter ausgebildet sind, welche von einem Kühlmedium durchströmt werden.

3. Verfahren nach einem der Ansprüche 1 oder 2, **dadurch gekennzeichnet, dass** das Metallband (10) im Anschluss an den Schwebeofen (3) auf einem Luftkissen schwebend durch eine Kühlstrecke (5) geführt wird, wobei die berührungslose Regelung des Bandlaufes (4) mit Hilfe einer weiteren ortsfesten elektromagnetischen Einrichtung auch innerhalb der Kühlstrecke (5) erfolgt.

4. Vorrichtung zur Regelung des Bandlaufes (4) eines Nichteisenmetallbandes (10) innerhalb eines Schwebeofens (3), **dadurch gekennzeichnet, dass** die Vorrichtung einen Positionssensor (2) zur Ermittlung der seitlichen Auslenkungen des Metallbandes (10) und regelbare Elektromagnete (1) aufweist, die innerhalb des Schwebeofens (3) angeordnet sind und die beabstandet oberhalb und/oder unterhalb des Metallbandes (10) angeordnet sind, wobei durch die Elektromagnete (1) eine auf das Metallband (10) wirkende Lorentzkraft erzeugbar ist, die in eine in der Bandlaufebene liegenden Richtung senkrecht zum Bandlauf (4) wirkt, wodurch eine seitliche Auslenkung des Metallbandes korrigierbar ist.

5. Vorrichtung nach Anspruch 4, **dadurch gekennzeichnet, dass** die Elektromagnete (1) Wicklungen aufweisen, die als Hohlleiter ausgebildet sind und die von einem Kühlmedium durchströmbar sind.

6. Vorrichtung nach einem der Ansprüche 4 oder 5, **dadurch gekennzeichnet, dass** die Elektromagnete durch eine Keramikabdeckung geschützt sind.

## Claims

1. Method for controlling the strip run (4) of a metal strip (10) through a treatment device (3), where the treatment device is a floating furnace (3) through which the metal strip (10) is guided horizontally floating on air cushions and where the strip run (4) is controlled inside the floating furnace (3), **characterized in that** lateral deflection of the metal strip is detected by a position sensor (2) and regulated accordingly, where the strip run (4) is controlled contact-free with the aid of fixed, adjustable electromagnets (1) and where the metal strip (10) is a nonferrous metal strip in which eddy currents are generated by the adjustable electromagnets (1) and these in turn create a magnetic field that interacts with the magnetic field of the electromagnets (1) and thus generates a Lorentz force on the level of the strip in a direction perpendicular to the strip running direction (4), which corrects the lateral deflection of the metal strip (10).

2. Method according to Claim 1, **characterized in that** the adjustable electromagnets (1) have windings, which are designed as hollow conductors through which a cooling medium passes.

3. Method according to one of Claims 1 or 2, **characterized in that** the metal strip (10) is guided through a cooling line (5) floating on an air cushion immediately after the floating furnace (3), where the strip run (4) is also controlled contact-free within this cooling section (5) with the aid of another fixed electromagnetic device.

4. Device for controlling the strip run (4) of a nonferrous metal strip (10) within a floating furnace (3), **characterized in that** the device has a position sensor (2) to determine the lateral deflection of the metal strip (10) and adjustable electromagnets (1) arranged inside the floating furnace (3) and at a distance above and/or below the metal strip (10), where a Lorentz force acting on the metal strip (10) can be generated by the electromagnets (1), where this force acts in a direction on the level of the strip run perpendicular to the strip run (4), enabling lateral deflection of the metal strip to be corrected.

5. Device according to Claim 4, **characterized in that** the electromagnets (1) have coils designed as hollow conductors and through which a cooling medium passes.

6. Device according to one of Claims 4 to 5, **characterized in that** the electromagnets are protected by a ceramic cover.

## Revendications

1. Procédé de réglage du sens d'avance (4) d'une bande métallique (10) dans un dispositif de traitement (3), le dispositif de traitement étant un four à sustentation électrostatique (3), dans lequel la bande métallique (10) est introduite par sustentation à l'horizontal sur des coussins d'air et le réglage du sens d'avance (4) s'effectuant à l'intérieur du four à sustentation électrostatique (3), **caractérisé en ce qu'**une déflexion latérale de la bande métallique est déterminée par un capteur de position (2) et est réglée en conséquence, le réglage du sens d'avance (4) s'effectuant sans contact à l'aide d'électroaimants réglables fixes (1) et la bande métallique (10) étant une bande de métal non ferreux, dans laquelle les électroaimants réglables (1) produisent des courants de Foucault, qui à leur tour produisent un champ magnétique qui coopère avec le champ magnétique des électroaimants (1) et ainsi produisant une force de Lorentz dans le plan de la bande dans un sens perpendiculaire au sens d'avance (4), permettant ainsi de corriger la déflexion latérale de la bande métallique (10).

2. Procédé selon la revendication 1, **caractérisé en ce que** les électroaimants réglables (1) présentent des enroulements qui sont conçus sous la forme de guides d'ondes dans lesquels s'écoule un fluide de refroidissement.

3. Procédé selon l'une des revendications 1 ou 2, **caractérisé en ce que,** après le four à sustentation électrostatique (3), la bande métallique (10) est guidée par sustentation sur un coussin d'air dans un tunnel de refroidissement (5), le réglage sans contact du sens d'avance (4) s'effectuant à l'aide d'un autre dispositif électromagnétique fixe également disposé à l'intérieur du tunnel de refroidissement (5).

4. Dispositif de réglage du sens d'avance (4) d'une bande en métal non ferreux (10) à l'intérieur d'un four à sustentation électrostatique (3), **caractérisé en ce que** le dispositif présente un capteur de position (2) pour déterminer les déflexions latérales de la bande métallique (10) et des électroaimants réglables (1) qui sont disposés à l'intérieur du four à sustentation électrostatique (3) et à une certaine distance au-dessus et/ou en dessous la bande métallique (10), les électroaimants (1) produisant une force de Lorentz agissant sur la bande métallique (10), ladite force agit dans un sens situé dans le plan d'avance de bande perpendiculaire au sens d'avance (4), permettant ainsi de corriger une déflexion latérale de la bande métallique.

5. Dispositif selon la revendication 4, **caractérisé en ce que** les électroaimants (1) présentant des enroulements qui sont conçus sous la forme de guides d'ondes dans lesquels s'écoule un fluide de refroidissement.

6. Dispositif selon l'une des revendications 4 ou 5, **caractérisé en ce que** les électroaimants sont protégés par un revêtement en céramique.
